# EUROPÄISCHE PATENTANMELDUNG

(11) **EP 4 764 584 A1**
(43) Veröffentlichungstag der Anmeldung: **24.06.2026**
(21) Anmeldenummer: 24220566.4
(22) Anmeldetag: 17.12.2024
(51) Int. Cl.: G01S 3/14

(54) **VERFAHREN, VORRICHTUNG UND SYSTEM ZUR RICHTUNGSBESTIMMUNG EINES ABSCHUSSES**

(71) Anmelder: Plath Signal Products GmbH & Co. KG, 20097 Hamburg (DE)
(72) Erfinder: MEIXNER, Roland, 20099 Hamburg (DE)
(74) Vertreter: Vossius & Partner Patentanwälte Rechtsanwälte mbB

(57) **Zusammenfassung**

Die vorliegende Erfindung betrifft ein Verfahren zur Richtungsbestimmung eines Abschusses, insbesondere eines Munitionsabschusses, wobei das Verfahren aufweist: Erfassen, mittels mindestens einer Antenne, eines elektromagnetischen Spektrums, Filtern des erfassten elektromagnetischen Spektrums, Extrahieren eines elektromagnetischen Signals aus dem elektromagnetischen Spektrum, Bestimmen von mindestens einem Parameter des elektromagnetischen Signals und Bestimmen einer Ursprungsrichtung des Abschusses basierend auf dem mindestens einen Parameter des elektromagnetischen Signals. Die Erfindung betrifft ferner eine entsprechende Vorrichtung und ein System.

## Beschreibung

Die vorliegende Offenbarung betrifft ein Verfahren und eine Vorrichtung zur Richtungsbestimmung eines Abschusses oder elektromagnetischen Spektrums. Insbesondere betrifft sie ein Verfahren und eine Vorrichtung zur Detektion und Richtungsbestimmung zum Ursprungsort des Abschusses von Munition unter Ausnutzung der dabei auftretenden Effekte im elektromagnetischen Spektrum.

Aufgrund von Versuchen konnte nachgewiesen werden, dass beim Verschuss von Munition, insbesondere von panzerbrechender Treibspiegelmunition, elektromagnetische Emissionen als Pulse auftreten. In herkömmlichen Systemen werden lediglich die Emissionen detektiert, ohne die zugehörige Einfallsrichtung zu bestimmen. Die Einfallsrichtung ist jedoch von Bedeutung, um entweder Schutzmaßnahmen gegen die Munition oder deren Wirkungen einzuleiten oder zusätzliche Informationen über militärische Aktivitäten, insbesondere über einen im Gange befindlichen oder bevorstehenden Angriff, zu liefern.

Weiterhin weisen die vorhandenen Technologien oftmals eine unzureichende Trennung zwischen relevanten und irrelevanten Emissionen auf. Dies führt zu einer hohen Falsch-Positiv-Rate, bei der harmloses Hintergrundrauschen als Munitionsabschuss interpretiert wird, sowie zu einer niedrigen Detektionsgenauigkeit, was eine zuverlässige Identifikation von Abschüssen erschwert.

Die vorliegende Offenbarung hat daher zum Ziel, die Probleme des Stands der Technik zumindest teilweise zu lösen und insbesondere eine Einfallrichtung eines Abschusses anhand eines elektromagnetischen Spektrums zu detektieren. Dies kann insbesondere unter EchtzeitVerarbeitung und -Anzeige der detektierten Emissionen und ihrer Richtungen erfolgen. Somit kann eine Verzögerung der Reaktionszeit und verminderte Effektivität der notwendigen Schutzmaßnahmen verhindert werden, da die relevanten Informationen frühestmöglich verfügbar sind.

Die Erfindung wird in den unabhängigen Ansprüchen definiert. Abhängige Ansprüche beschreiben bevorzugte Ausführungsformen.

Die vorliegende Erfindung betrifft ein Verfahren zur Richtungsbestimmung eines Abschusses, insbesondere eines Munitionsabschusses, wobei das Verfahren aufweist: Erfassen, mittels mindestens einer Antenne, eines elektromagnetischen Spektrums, Filtern des erfassten elektromagnetischen Spektrums, Extrahieren eines elektromagnetischen Signals aus dem elektromagnetischen Spektrum, Bestimmen von mindestens einem Parameter des elektromagnetischen Signals und Bestimmen einer Ursprungsrichtung des Abschusses basierend auf dem mindestens einen Parameter des elektromagnetischen Signals.

Diverse Ausführungsformen implementieren vorzugsweise die folgenden Merkmale.

Bevorzugt umfasst das Verfahren ferner das Bestimmen, basierend auf dem mindestens einen Parameter, ob das elektromagnetische Signal einem Abschuss entspricht.

Bevorzugt ist der mindestens eine Parameter eine Amplitude und/oder eine Frequenz und/oder eine Dauer und/oder eine Flankensteilheit des elektromagnetischen Signals.

Bevorzugt umfasst das Filtern des elektromagnetischen Spektrums eine Rauschunterdrückung und eine Signalverstärkung.

Bevorzugt umfasst das Bestimmen der Ursprungsrichtung die Anwendung einer Fast Fourier Transformation, FFT, auf das elektromagnetische Spektrum, einer Frequenzextraktion des transformierten Spektrums, und einer inversen FFT, iFFT sowie einer Interferometer- und Korrelationsberechnung und/oder -analyse auf das extrahierte Spektrum.

Bevorzugt umfasst das Bestimmen der Ursprungsrichtung das Aufteilen des Signals in mehrere Teilbänder, die Detektion eines elektromagnetischen Teilbandsignals in jedem der Teilbänder und die Anwendung einer Pseudo-Wigner-Ville-Transformation sowie einer nachfolgenden Hough-Transformation auf das detektierte Teilbandsignal und ferner die Bestimmung des mindestens einen Parameters anhand eines Anfangs, eines Endes, einer Orientierung und einer Häufung von Zeit-Frequenz-Linien aus den Ergebnissen der zwei aufeinanderfolgenden Transformationen.

Bevorzugt umfasst das Verfahren ferner das Ausgeben eines Signals über den erkannten Abschuss und/oder eine Ursprungsrichtung des erkannten Abschusses.

Bevorzugt ist das Signal ein digitales Signal. Bevorzugt ist das Signal ein visuelles und/oder auditives Signal.

Die vorliegende Erfindung betrifft ferner eine Vorrichtung zur Richtungsbestimmung eines Abschusses, insbesondere eines Munitionsabschusses, wobei die Vorrichtung aufweist: mindestens eine Antenne, die konfiguriert ist, ein elektromagnetisches Spektrum zu erfassen und mindestens einen Prozessor, wobei der Prozessor konfiguriert ist, zum: Filtern des erfassten elektromagnetischen Spektrums, Extrahieren eines elektromagnetischen Signals aus dem elektromagnetischen Spektrum, Bestimmen von mindestens einem Parameter des elektromagnetischen Signals und Bestimmen einer Ursprungsrichtung des Abschusses basierend auf dem mindestens einen Parameter des elektromagnetischen Signals.

Diverse Ausführungsformen implementieren vorzugsweise die folgenden Merkmale.

Bevorzugt ist der Prozessor ferner konfiguriert zum Bestimmen, basierend auf dem mindestens einen Parameter, ob das elektromagnetische Signal einem Abschuss entspricht.

Bevorzugt ist der mindestens eine Parameter eine Amplitude und/oder eine Frequenz und/oder eine Dauer und/oder eine Flankensteilheit des elektromagnetischen Signals.

Bevorzugt ist der Prozessor konfiguriert, beim Filtern des elektromagnetischen Spektrums eine Rauschunterdrückung und eine Signalverstärkung durchzuführen.

Bevorzugt ist der Prozessor konfiguriert, beim Bestimmen der Richtung eine Fast Fourier Transformation, FFT, auf das elektromagnetische Spektrum, eine Frequenzextraktion des transformierten Spektrums, und eine inverse FFT, iFFT, sowie eine Interferometer- und Korrelationsberechnung und/oder -analyse auf das extrahierte Spektrum anzuwenden.

Bevorzugt ist der Prozessor konfiguriert, beim Bestimmen der Richtung das Aufteilen des Signals in mehrere Teilbänder, die Detektion eines elektromagnetischen Teilbandsignals in jedem der Teilbänder und die Anwendung einer Pseudo-Wigner-Ville-Transformation sowie einer nachfolgenden Hough-Transformation auf das detektierte Teilbandsignal durchzuführen, und den mindestens einen Parameter anhand eines Anfangs, eines Endes, einer Orientierung und einer Häufung von Zeit-Frequenz-Linien aus den Ergebnissen der zwei aufeinanderfolgenden Transformationen zu bestimmen.

Bevorzugt ist der Prozessor ferner konfiguriert, ein Signal über den erkannten Abschuss und/oder eine Richtung des erkannten Abschusses auszugeben.

Bevorzugt ist das Signal ein digitales Signal. Bevorzugt ist das Signal ein visuelles und/oder auditives Signal.

Bevorzugt umfasst die Vorrichtung ferner einen Lautsprecher und/oder ein Display zum Ausgeben des Signals.

Die vorliegende Erfindung bezieht sich ferner auf ein System, umfassend eine Vorrichtung wie oben beschrieben und einen Server, der konfiguriert ist, drahtlos oder drahtgebunden mit der Vorrichtung zu kommunizieren.

Die Erfindung wird ferner mit Bezug auf die angehängten Figuren beschrieben. Darin werden gleiche oder ähnliche Merkmale mit den gleichen oder ähnlichen Bezugszeichen versehen. Ferner können die Begriffe (elektromagnetisches) Spektrum und (elektromagnetisches) Signal synonym verwendet werden.

Es zeigen:
Fig. 1 ein Blockdiagramm gemäß einer Ausführungsform der vorliegenden Offenbarung,
Fig. 2 ein Flussdiagramm gemäß einer Ausführungsform der vorliegenden Offenbarung, und
Fig. 3 ein Blockdiagramm gemäß einer Ausführungsform der vorliegenden Offenbarung.

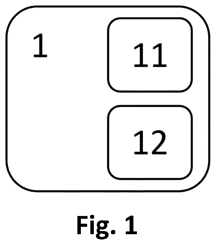

Eine Vorrichtung 1 zur Richtungsbestimmung einer elektromagnetischen Emission (einer elektromagnetischen Strahlung), beispielsweise hervorgerufen durch einen Abschuss, gemäß einer Ausführungsform wie in Fig. 1 gezeigt weist mindestens eine Antenne 11 auf, die konfiguriert ist, eine elektromagnetische Emission bzw. ein elektromagnetisches Spektrum, vorzugsweise aus den Frequenzbereichen VHF/UHF, weiter bevorzugt zwischen 200 MHz und 400 MHz, zu erfassen. Die Antenne 11 kann eine Peilantenne sein. In einer Ausführungsform kann die Antenne 11 aus mehreren Antennenelementen bestehen, um eine Richtung eines einfallenden Signals bestimmen zu können.

Die Vorrichtung weist ferner mindestens einen Prozessor 12 auf. In einer Ausführungsform ist der Prozessor 12 konfiguriert zum Filtern des erfassten elektromagnetischen Spektrums. Das Filtern kann mittels eines digitalen, minimalphasigen IIR-Bandpassfilters durchgeführt werden. Ein derartiger Filter kann beispielsweise mindestens 18 Koeffizienten, Filterflanken mit einer Steilheit von mindestens 80 dB/Dekade, eine Dämpfung von mindestens 50 dB außerhalb des Durchlassbereiches und ein maximales Ripple im Durchlassbereich von 3 dB aufweisen. Der Prozessor 12 ist ferner konfiguriert zum Extrahieren eines elektromagnetischen Signals aus dem elektromagnetischen Spektrum und Bestimmen von mindestens einem Parameter des elektromagnetischen Signals. Basierend auf dem mindestens einen Parameter des elektromagnetischen Signals wird durch den Prozessor eine Richtung des Abschusses bestimmt. In einer Ausführungsform kann bestimmt werden, basierend auf dem mindestens einen Parameter, ob das elektromagnetische Signal einem Abschuss entspricht.

Der mindestens eine Prozessor 12 kann konfiguriert sein, eine Signalverarbeitungseinheit und/oder eine (Peil-) Empfängereinheit und/oder eine Datenverarbeitungseinheit zu implementieren. In einer Ausführungsformen können obige Einheiten bzw. deren Funktionalität durch mehrere getrennte Prozessoren 12 bereitgestellt werden.

Der mindestens eine Parameter kann eine Amplitude und/oder eine Frequenz und/oder eine Dauer und/oder eine Flankensteilheit des elektromagnetischen Signals umfassen.

Das Filtern des elektromagnetischen Spektrums kann eine Rauschunterdrückung und/oder eine Signalverstärkung umfassen.

Das durch die eine oder mehrere Antenne(n) 11 erfasste elektromagnetische Spektrum (bzw. die erfasste Emission) kann als Antennenspannung an den Prozessor 12 (Funkpeilempfänger) weitergeben werden. Im Falle mehrerer Antennen 11 bzw. einer Antenne 11 mit mehreren Antennenelementen kann aus den einzelnen Antennenspannungen dann über einen Vergleich der Amplituden und/oder der Phasenlage die Einfallsrichtung des elektromagnetischen Signals bestimmt werden. Ferner kann das Signal gefiltert werden, um kurzzeitige Emissionen, die auf einen Verschuss hindeuten können, von anderen Emissionen zu unterscheiden.

In einer Ausführungsform kann zum Bestimmen der Richtung und/oder zur Detektion eines Verschusses eine Fast Fourier Transformation, FFT, auf das elektromagnetische Spektrum angewendet werden. Ferner können aus dem FFT transformierten Spektrum Frequenzen und/oder Parameter extrahiert werden. Die Frequenzen können mittels eines Filters, das auf typische/passende Frequenzen aus den Frequenzbereichen VHF/UHF, vorzugweise zwischen 200 MHz und 400 MHz, für einen zu detektierenden Verschuss eingestellt ist, extrahiert werden.

Auf das extrahierte Spektrum kann im Folgenden eine inverse FFT, iFFT, angewendet werden. Mittels Interferometer- und Korrelationsberechnung und/oder -analyse können das Vorhandensein und die Einfalls- bzw. Ursprungsrichtung des Verschusses bestimmt werden. Die Ursprungsrichtung kann insbesondere bei der Verwendung mehrerer Peilantennen bestimmt werden.

In einer Ausführungsform kann beim Bestimmen der Richtung das Signal in mehrere Teilbänder aufgeteilt werden. Dies kann beispielsweise mittels einer Filterbank durchgeführt werden, wobei die Filter der Filterbank jeweils unterschiedliche Mittenfrequenzen aufweisen und sich die Durchlassbereiche der Filter vorzugsweise überlappen.

In jedem der Teilbänder kann im Folgenden ein Hüllkurvendetektor zur Detektion eines elektromagnetischen Teilbandsignals in jedem der Teilbänder verwendet werden. Danach wird zuerst eine Pseudo-Wigner-Ville-Transformation und danach eine Hough-Transformation auf das detektierte Teilbandsignal durchgeführt. Basierend auf den aufeinanderfolgenden Transformationen erfolgt die Überführung der Impulse, die beim Abschuss entstehen, in eine Linie in der Zeit-Frequenz-Ebene und der Bestimmung des mindestens einen Parameters anhand des Anfangs, des Endes, der Orientierung und der Häufung der Zeit-Frequenz-Linien. Basierend auf dem mindestens einen Parameter kann bestimmt werden, ob das elektromagnetische Signal einem Abschuss entspricht.

Der Prozessor 12 kann ferner konfiguriert sein, ein Signal über den erkannten Abschuss und/oder eine Richtung des erkannten Abschusses auszugeben. Dies kann ein digitales Signal sein, das an eine externe Vorrichtung (beispielsweise ein Server, ein externes Display, Lautsprecher oder Dateninterface) oder eine interne Einheit der Vorrichtung (beispielsweise ein Display, Lautsprecher, o.ä.) gesendet wird.

Das Signal kann auch als visuelles und/oder auditives Signal ausgegeben werden. Dafür kann die Vorrichtung einen Lautsprecher und/oder ein Display zum Ausgeben des Signals umfassen.

Die Vorrichtung kann weiterhin mit verschiedenen Maßnahmen zum Schutz vor Umwelteinflüssen und gegnerischen Störungen ausgestattet sein. Zur Erhöhung der Widerstandsfähigkeit können gehärtete Gehäuse und Abschirmungen zum Einsatz kommen. Eine kontinuierliche Stromversorgung kann durch Batterien, Akkumulatoren oder externe Stromversorgung sichergestellt werden.

Die vorliegende Offenbarung umfasst auch ein entsprechendes Verfahren. Die oben genannten Merkmale sind gleichermaßen auf das Verfahren anwendbar.

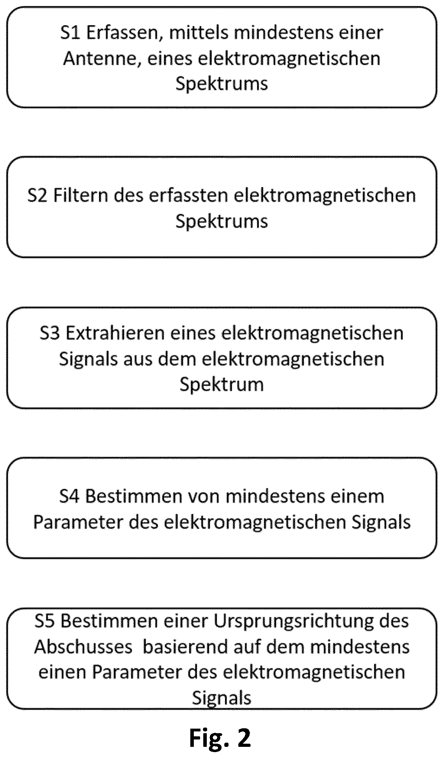

Fig. 2 zeigt ein Flussdiagramm eines Verfahrens zur Richtungsbestimmung eines Abschusses, insbesondere eines Munitionsabschusses. Das Verfahren weist die folgenden Schritte auf: Erfassen S1, mittels mindestens einer Antenne 11, eines elektromagnetischen Spektrums, Filtern S2 des erfassten elektromagnetischen Spektrums, Extrahieren S3 eines elektromagnetischen Signals aus dem elektromagnetischen Spektrum, Bestimmen S4 von mindestens einem Parameter des elektromagnetischen Signals, Bestimmen S5 einer (Ursprungs-) Richtung des Abschusses basierend auf dem mindestens einen Parameter des elektromagnetischen Signals.

Das Verfahren kann ferner das Bestimmen, basierend auf dem mindestens einen Parameter, ob das elektromagnetische Signal einem Abschuss entspricht, umfassen. Mit anderen Worten kann das Verfahren sowohl zur Detektion als auch Richtungsbestimmung verwendet werden.

Der mindestens eine Parameter kann eine Amplitude und/oder eine Frequenz und/oder eine Dauer und/oder eine Flankensteilheit des elektromagnetischen Signals sein.

Das Filtern des elektromagnetischen Spektrums kann eine Rauschunterdrückung und eine Signalverstärkung umfassen.

Das Bestimmen der Richtung kann die Anwendung einer Fast FourierTransformation, FFT, auf das elektromagnetische Spektrum, einer Frequenzextraktion des transformierten Spektrums, und einer inversen FFT, iFFT, auf das extrahierte Spektrum umfassen. Mittels Interferometer- und Korrelationsberechnung und/oder -analyse kann dann eine Richtung des Abschusses bestimmt werden.

Das Bestimmen der Richtung kann das Aufteilen des Signals in mehrere Teilbänder, die Detektion eines elektromagnetischen Teilbandsignals in jedem der Teilbänder und die Anwendung einer Pseudo-Wigner-Ville-Transformation und einer nachfolgenden Hough-Transformation auf das detektierte Teilbandsignal umfassen.

Das Verfahren kann ferner das Ausgeben eines Signals über den erkannten Abschuss und/oder eine Richtung des erkannten Abschusses umfassen.

Das Signal kann ein digitales Signal sein. Das Signal kann ein visuelles und/oder auditives Signal sein.

Die Offenbarung betrifft ferner ein entsprechendes System. Das System kann mindestens eine der oben beschriebenen Vorrichtungen sowie einen Server und/oder ein Display und/oder weitere Sensoren und/oder Antennen umfassen. Die jeweiligen Elemente können drahtlos oder drahtgebunden miteinander kommunizieren.

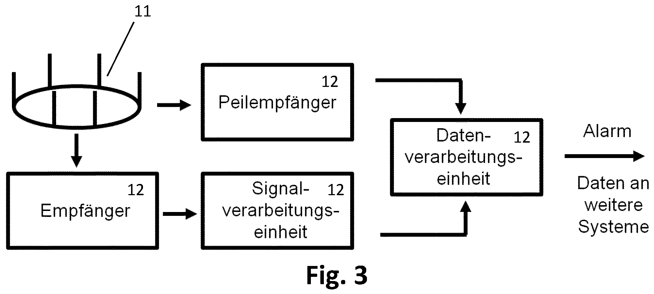

Wie oben beschrieben, und wie in Fig. 3 dargestellt, kann gemäß einer Ausführungsform mindestens eine Antenne 11, deren Elemente auch für eine Richtungsbestimmung ausgelegt sind, elektromagnetischen Emissionen erfassen, die beim Abschuss von Munition entstehen. Ein Prozessor 12 (nachgeschalteter Empfänger) kann die erfassten Signale verstärken und unerwünschtes Rauschen herausfiltern.

Im nächsten Schritt kann der Prozessor 12 (Signalverarbeitungseinheit) das verstärkte und gefilterte Signal analysieren. Dazu können das Signal aus dem Spektrum extrahiert und die Signalparameter Amplitude, Frequenz, Dauer und Flankensteilheit ermittelt werden. Anhand dieser Parameter kann ermittelt werden, ob es sich um ein Signal handelt, das typisch für einen Munitionsabschuss ist. Gleichzeitig zum Vorgang der Signalanalyse können Peilantennen die Einfallsrichtung der identifizierten Emissionen erfassen. Die Peilantennen können die oben genannte mindestens eine Antenne 11 oder zusätzlich vorgesehene Antennen sein.

Der Prozessor 12 (Peilempfänger) kann die Daten der Peilantennen verarbeiten und die genaue Einfallsrichtung bestimmen. Die Daten aus der Signalverarbeitungseinheit sowie aus dem Peilempfänger können anschließend in dem Prozessor 12 oder einem Speicher (Datenverarbeitungseinheit) zusammengeführt werden. Dabei kombiniert eine Datenverarbeitungseinheit die Informationen der verschiedenen Komponenten und bringt die Richtung zum Ursprungsort des Abschusses zur Anzeige in Echtzeit.

Weiterhin wird bei erfolgreicher Detektion und Richtungsbestimmung ein Alarm ausgelöst. Die Ergebnisse werden zudem an verbundene Systeme oder Bediener weitergeleitet, um entsprechende Schutzmaßnahmen einzuleiten. Somit implementiert die Datenverarbeitungseinheit die Schnittstelle zur Anzeige oder Weiterleitung der Informationen an verbundene Systeme.

Zusammenfassend betrifft die vorliegende Offenbarung ein Verfahren und eine Vorrichtung zur Detektion und Richtungsbestimmung des Ursprungsorts von Munitionsabschüssen. Hierbei wird der physikalische Effekt genutzt, dass der Abschuss von Munition einen Impuls im elektromagnetischen Spektrum erzeugt. Dieser Impuls wird mittels mindestens einer Antenne (Mess- und Peileinrichtungen) erfasst und analysiert. Ein wesentlicher Parameter ist die Einfallsrichtung des elektromagnetischen Impulses. Das beschriebene Verfahren beruht auf elektromagnetischen Messmethoden zur Detektion von Munitionsabschüssen. Zwischen der Detektion des elektromagnetischen Impulses und dem Eintreffen der Munition am Ziel liegt ein erheblicher zeitlicher Unterschied. Dieser Unterschied kann genutzt werden, um Schutzmaßnahmen gegen die Munition zu ergreifen. Zudem liefert der Abschuss von Munition Hinweise auf militärische Aktivitäten, die in ein militärisches Lagebild integriert werden können, um Informationen über die Position und die Aktivitäten von freundlichen und feindlichen Kräften zu liefern.

Die Vorrichtung kann durch das optionale Integrieren von Schnittstellen in bestehende militärische oder zivile Überwachungssysteme integriert werden, da sie über diese Schnittstellen eine Datenübertragung an eine Zentrale durchführen kann. Die modulare Bauweise erleichtert Wartung und Upgrades. Diese Implementierung ermöglicht eine effektive und präzise Detektion sowie Richtungsbestimmung von Munitionsabschüssen und trägt zur Erhöhung der Sicherheit und zur Verbesserung der Lageerfassung bei.

Die Vorrichtung kann u. a. sowohl in unbemannte Luftfahrzeuge zur weiträumigen Überwachung und schnellen Reaktion auf Bedrohungen als auch in gepanzerte Fahrzeuge zur mobilen Überwachung von Kampfgebieten oder zum Schutz der Trägerfahrzeuge an sich integriert werden.

Die Vorrichtung zur Detektion und Richtungsbestimmung von Munitionsabschüssen kann in verschiedenen Bereichen angewendet werden. Dazu gehören beispielsweise:
- Schlachtfeldüberwachung: Frühzeitige Erkennung von Feindbeschuss und schnelle Reaktion zur Verbesserung der Schutzmaßnahmen für Truppen und Einrichtungen.
- Artillerieaufklärung: Unterstützung der eigenen Artillerieeinheiten durch präzise Bestimmung der gegnerischen Artilleriepositionen.
- Einsatzkoordination: Bereitstellung von Echtzeitinformationen über Feindaktivitäten zur besseren Koordination von Truppenbewegungen und Angriffsstrategien.
- Kriminalitätsbekämpfung: Erkennung von Schüssen in städtischen Gebieten zur schnellen Einsatzleitung und Verbrechensbekämpfung.
- Überwachung von Großveranstaltungen: Einsatz bei Sportveranstaltungen, Konzerten und öffentlichen Versammlungen zur Erhöhung der Sicherheit.
- Ballistikforschung: Analyse und Forschung im Bereich der Munitionsabschüsse und deren Auswirkungen auf verschiedene Umgebungen.
- Entwicklung neuer Schutztechnologien: Nutzung der gewonnenen Daten zur Entwicklung fortschrittlicher Schutzmaßnahmen und -technologien für Militär und Polizei.

Gemäß der vorliegenden Offenbarung kann eine Einfallsrichtung, eines Verschusses bestimmt werden, indem die beim Verschuss hervorgerufene elektromagnetische Emission von einer Antenne, beispielsweise einer Peilantenne, erfasst und einem Prozessor, wie etwa einem Funkpeilempfänger, zugeleitet wird, der die Einfallsrichtung der Emission bestimmt. Die Antenne kann dabei aus unterschiedlichen Antennenelementen bestehen, die die Emission als Antennenspannung an den Funkpeilempfänger weitergeben. Aus den einzelnen Antennenspannungen kann dann über einen Vergleich der Amplituden und/oder der Phasenlage die Einfallsrichtung bestimmt werden. Ferner kann das Signal gefiltert werden, um diese kurzzeitige Emission von anderen Emissionen unterscheiden zu können. Somit können sowohl eine zuverlässige Detektion (sehr kleine Falsch-Negativ-Rate) als auch eine geringe Anzahl Fehlalarme (vernünftige Falsch-Positiv-Rate) gewährleistet werden.

Während verschiedene Ausführungsformen der vorliegenden Offenbarung oben beschrieben wurden, sind diese nur als Beispiel dargestellt und nicht als einschränkend zu verstehen. Ebenso können die verschiedenen Diagramme ein Beispiel architektonischer oder Konfiguration, die zur Verfügung gestellt werden, um Personen von gewöhnlichen Fähigkeiten in der Technik zu ermöglichen, um beispielhafte Merkmale und Funktionen der vorliegenden Offenbarung zu verstehen, zu zeigen. Solche Personen würden jedoch verstehen, dass die vorliegende Offenbarung nicht auf die dargestellten Beispielarchitekturen oder -konfigurationen beschränkt ist, sondern unter Verwendung einer Vielzahl von alternativen Architekturen und Konfigurationen implementiert werden kann. Darüber hinaus können ein oder mehrere Merkmale einer Ausführungsform mit einem oder mehreren Merkmalen einer anderen hierin beschriebenen Ausführungsform kombiniert werden, wie Personen mit gewöhnlichen Kenntnissen der Technik verstehen würden. Daher sollte die Breite und der Umfang der vorliegenden Offenbarung nicht durch eine der oben beschriebenen beispielhaften Ausführungsformen eingeschränkt werden.

Es versteht sich auch, dass jede Bezugnahme auf ein Element hier mit einer Bezeichnung wie "erstes", "zweites" usw. nicht allgemein die Menge oder Reihenfolge dieser Elemente einschränkt. Vielmehr können diese Bezeichnungen hier als praktisches Mittel zur Unterscheidung zwischen zwei oder mehr Elementen oder Instanzen eines Elements verwendet werden. Der Hinweis auf ein erstes und ein zweites Element bedeutet also nicht, dass nur zwei Elemente verwendet werden können oder dass das erste Element dem zweiten Element in irgendeiner Weise vorausgehen muss.

Darüber hinaus versteht eine Person, die über normale Fachkenntnisse verfügt, dass Informationen und Signale durch eine Vielzahl verschiedener Technologien und Techniken dargestellt werden können. So können beispielsweise Daten, Anweisungen, Befehle, Informationen, Signale, Bits und Symbole, auf die in der obigen Beschreibung Bezug genommen wird, durch Spannungen, Ströme, elektromagnetische Wellen, magnetische Felder oder Teilchen, optische Felder oder Teilchen oder eine beliebige Kombination davon dargestellt werden.

Der Fachmann wird ferner verstehen, dass jeder der verschiedenen dargestellten logischen Blöcke, Einheiten, Prozessoren, Mittel, Schaltungen, Methoden und Funktionen, die im Zusammenhang mit den hier offengelegten Aspekten beschrieben werden, durch elektronische Hardware (z. B. eine digitale Implementierung, eine analoge Implementierung oder eine Kombination aus beiden), Firmware, verschiedene Formen von Programm- oder Designcode, der Anweisungen enthält (die hier der Einfachheit halber als "Software" oder "Softwareeinheit" bezeichnet werden können), oder eine beliebige Kombination dieser Techniken implementiert werden kann.

Um diese Austauschbarkeit von Hardware, Firmware und Software zu verdeutlichen, wurden oben verschiedene Komponenten, Blöcke, Einheiten, Schaltungen und Schritte allgemein im Hinblick auf ihre Funktionalität beschrieben. Ob eine solche Funktionalität als Hardware, Firmware oder Software oder als Kombination dieser Techniken implementiert wird, hängt von der jeweiligen Anwendung und den dem Gesamtsystem auferlegten konstruktiven Beschränkungen ab. Fachleute können die beschriebene Funktionalität auf verschiedene Weise für jede einzelne Anwendung implementieren, aber solche Implementierungsentscheidungen führen nicht zu einer Abweichung vom Anwendungsbereich der vorliegenden Offenbarung. Gemäß verschiedenen Ausführungsformen kann ein Prozessor, ein Gerät, eine Komponente, ein Schaltkreis, eine Struktur, eine Maschine, eine Einheit usw. so konfiguriert werden, dass er/sie eine oder mehrere der hier beschriebenen Funktionen ausführt. Der Begriff "konfiguriert für" oder "konfiguriert für", wie er hier in Bezug auf eine bestimmte Operation oder Funktion verwendet wird, bezieht sich auf einen Prozessor, ein Gerät, eine Komponente, eine Schaltung, eine Struktur, eine Maschine, eine Einheit usw., der/die physisch so konstruiert, programmiert und/oder angeordnet ist, dass er/sie die bestimmte Operation oder Funktion ausführt.

Darüber hinaus versteht der Fachmann, dass verschiedene hier beschriebene logische Blöcke, Einheiten, Geräte, Komponenten und Schaltungen in einer integrierten Schaltung (IC) implementiert oder von dieser ausgeführt werden können, die einen Universalprozessor, einen digitalen Signalprozessor (DSP), eine anwendungsspezifische integrierte Schaltung (ASIC), ein Field Programmable Gate Array (FPGA) oder ein anderes programmierbares Logikgerät oder eine beliebige Kombination davon umfassen kann. Die logischen Blöcke, Einheiten und Schaltungen können ferner Antennen und/oder Sende-/Empfangsgeräte enthalten, um mit verschiedenen Komponenten innerhalb des Netzes oder des Geräts zu kommunizieren. Ein Mehrzweckprozessor kann ein Mikroprozessor sein, alternativ kann der Prozessor aber auch ein beliebiger konventioneller Prozessor, Controller oder Zustandsautomat sein. Ein Prozessor kann auch als eine Kombination von Recheneinheiten implementiert werden, z. B. eine Kombination aus einem DSP und einem Mikroprozessor, eine Vielzahl von Mikroprozessoren, ein oder mehrere Mikroprozessoren in Verbindung mit einem DSP-Kern oder jede andere geeignete Konfiguration zur Ausführung der hier beschriebenen Funktionen. Wenn die Funktionen in Software implementiert sind, können sie als eine oder mehrere Anweisungen oder Codes auf einem computerlesbaren Medium gespeichert werden. So können die Schritte eines hierin offengelegten Verfahrens oder Algorithmus als Software implementiert werden, die auf einem computerlesbaren Medium gespeichert ist.

Zu den computerlesbaren Medien gehören sowohl Computerspeichermedien als auch Kommunikationsmedien, einschließlich aller Medien, mit denen ein Computerprogramm oder ein Code von einem Ort zum anderen übertragen werden kann. Ein Speichermedium kann jedes verfügbare Medium sein, auf das ein Computer zugreifen kann. Solche computerlesbaren Medien können beispielsweise RAM, ROM, EEPROM, CD-ROM oder andere optische Plattenspeicher, Magnetplattenspeicher oder andere magnetische Speichervorrichtungen oder jedes andere Medium sein, das zum Speichern von gewünschtem Programmcode in Form von Anweisungen oder Datenstrukturen verwendet werden kann und auf das ein Computer zugreifen kann.

In diesem Dokument bezieht sich der Begriff "Einheit", wie er hier verwendet wird, auf Software, Firmware, Hardware und jede Kombination dieser Elemente zur Durchführung der hier beschriebenen zugehörigen Funktionen. Darüber hinaus werden die verschiedenen Einheiten zum Zweck der Diskussion als einzelne Einheiten beschrieben; wie jedoch für einen Fachmann offensichtlich ist, können zwei oder mehr Einheiten kombiniert werden, um eine einzige Einheit zu bilden, die die zugehörigen Funktionen gemäß den Ausführungsformen der vorliegenden Offenbarung ausführt.

Zusätzlich können Speicher oder andere Speichermedien sowie Kommunikationskomponenten in Ausführungsformen der vorliegenden Offenbarung verwendet werden. Aus Gründen der Übersichtlichkeit wurden in der obigen Beschreibung Ausführungsformen der vorliegenden Offenbarung unter Bezugnahme auf verschiedene Funktionseinheiten und Prozessoren beschrieben. Es wird jedoch deutlich, dass jede geeignete Verteilung der Funktionalität zwischen verschiedenen Funktionseinheiten, Verarbeitungslogikelementen oder Domänen verwendet werden kann, ohne dass die vorliegende Offenbarung dadurch beeinträchtigt wird. So können beispielsweise Funktionen, die in der Abbildung von separaten Verarbeitungslogikelementen oder Steuerungen ausgeführt werden, von demselben Verarbeitungslogikelement oder derselben Steuerung ausgeführt werden. Daher sind Verweise auf spezifische Funktionseinheiten nur Hinweise auf ein geeignetes Mittel zur Bereitstellung der beschriebenen Funktionalität und nicht als Hinweis auf eine strenge logische oder physische Struktur oder Organisation zu verstehen.

Verschiedene Modifikationen der in dieser Offenbarung beschriebenen Implementierungen sind für Fachleute leicht erkennbar, und die hierin definierten allgemeinen Grundsätze können auf andere Implementierungen angewandt werden, ohne vom Umfang dieser Offenbarung abzuweichen. Daher ist die Offenbarung nicht auf die hier gezeigten Implementierungen beschränkt, sondern hat den größtmöglichen Anwendungsbereich, der mit den hier offengelegten neuen Merkmalen und Grundsätzen vereinbar ist, wie sie in den nachstehenden Ansprüchen aufgeführt sind.

## Patentansprüche

1. Verfahren zur Richtungsbestimmung eines Abschusses, insbesondere eines Munitionsabschusses, wobei das Verfahren aufweist:
Erfassen (S1), mittels mindestens einer Antenne, eines elektromagnetischen Spektrums;
Filtern (S2) des erfassten elektromagnetischen Spektrums;
Extrahieren (S3) eines elektromagnetischen Signals aus dem elektromagnetischen Spektrum;
Bestimmen (S4) von mindestens einem Parameter des elektromagnetischen Signals; und
Bestimmen (S5) einer Ursprungsrichtung des Abschusses basierend auf dem mindestens einen Parameter des elektromagnetischen Signals.

2. Verfahren nach Anspruch 1, wobei das Verfahren ferner das Bestimmen, basierend auf dem mindestens einen Parameter, ob das elektromagnetische Signal einem Abschuss entspricht, umfasst.

3. Verfahren nach Anspruch 1 oder 2, wobei der mindestens eine Parameter eine Amplitude und/oder eine Frequenz und/oder eine Dauer und/oder eine Flankensteilheit des elektromagnetischen Signals ist; und/oder
wobei das Filtern des elektromagnetischen Spektrums eine Rauschunterdrückung und eine Signalverstärkung umfasst.

4. Verfahren nach einem der Ansprüche 1 bis 3, wobei das Bestimmen der Ursprungsrichtung die Anwendung einer Fast Fourier Transformation, FFT, auf das elektromagnetische Spektrum, einer Frequenzextraktion des transformierten Spektrums, und einer inversen FFT, iFFT sowie einer Interferometer- und Korrelationsberechnung und/oder - analyse auf das extrahierte Spektrum umfasst.

5. Verfahren nach einem der Ansprüche 1 bis 3, wobei das Bestimmen der Ursprungsrichtung das Aufteilen des Signals in mehrere Teilbänder, die Detektion eines elektromagnetischen Teilbandsignals in jedem der Teilbänder und die Anwendung einer Pseudo-Wigner-Ville-Transformation sowie einer nachfolgenden Hough-Transformation auf das detektierte Teilbandsignal umfasst und ferner die Bestimmung des mindestens einen Parameters anhand eines Anfangs, eines Endes, einer Orientierung und einer Häufung von Zeit-Frequenz-Linien aus den Ergebnissen der zwei aufeinanderfolgenden Transformationen umfasst.

6. Verfahren nach einem der Ansprüche 1 bis 5, wobei das Verfahren ferner das Ausgeben eines Signals über den erkannten Abschuss und/oder eine Ursprungsrichtung des erkannten Abschusses umfasst.

7. Verfahren nach Anspruch 6, wobei das Signal ein digitales Signal ist, und/oder wobei das Signal ein visuelles und/oder auditives Signal ist.

8. Vorrichtung zur Richtungsbestimmung eines Abschusses, insbesondere eines Munitionsabschusses, wobei die Vorrichtung aufweist:
mindestens eine Antenne, die konfiguriert ist, ein elektromagnetisches Spektrum zu erfassen;
mindestens einen Prozessor, wobei der Prozessor konfiguriert ist, zum:
Filtern des erfassten elektromagnetischen Spektrums;
Extrahieren eines elektromagnetischen Signals aus dem elektromagnetischen Spektrum;
Bestimmen von mindestens einem Parameter des elektromagnetischen Signals; und
Bestimmen einer Ursprungsrichtung des Abschusses basierend auf dem mindestens einen Parameter des elektromagnetischen Signals.

9. Vorrichtung nach Anspruch 8, wobei der Prozessor ferner konfiguriert ist zum Bestimmen, basierend auf dem mindestens einen Parameter, ob das elektromagnetische Signal einem Abschuss entspricht.

10. Vorrichtung nach Anspruch 8 oder 9, wobei der mindestens eine Parameter eine Amplitude und/oder eine Frequenz und/oder eine Dauer und/oder eine Flankensteilheit des elektromagnetischen Signals ist; und/oder
wobei der Prozessor konfiguriert ist, beim Filtern des elektromagnetischen Spektrums eine Rauschunterdrückung und eine Signalverstärkung durchzuführen.

11. Vorrichtung nach einem der Ansprüche 8 bis 10, wobei der Prozessor konfiguriert ist, beim Bestimmen der Richtung eine Fast Fourier Transformation, FFT, auf das elektromagnetische Spektrum, eine Frequenzextraktion des transformierten Spektrums, und eine inverse FFT, iFFT, sowie eine Interferometer- und Korrelationsberechnung und/oder - analyse auf das extrahierte Spektrum anzuwenden.

12. Vorrichtung nach einem der Ansprüche 8 bis 10, wobei der Prozessor konfiguriert ist, beim Bestimmen der Richtung das Aufteilen des Signals in mehrere Teilbänder, die Detektion eines elektromagnetischen Teilbandsignals in jedem der Teilbänder und die Anwendung einer Pseudo-Wigner-Ville-Transformation sowie einer nachfolgenden Hough-Transformation auf das detektierte Teilbandsignal durchzuführen, und den mindestens einen Parameter anhand eines Anfangs, eines Endes, einer Orientierung und einer Häufung von Zeit-Frequenz-Linien aus den Ergebnissen der zwei aufeinanderfolgenden Transformationen zu bestimmen.

13. Vorrichtung nach einem der Ansprüche 8 bis 12, wobei der Prozessor ferner konfiguriert ist, ein Signal über den erkannten Abschuss und/oder eine Richtung des erkannten Abschusses auszugeben;
wobei das Signal vorzugsweise ein digitales Signal ist; und/oder
wobei das Signal vorzugsweise ein visuelles und/oder auditives Signal ist.

14. Vorrichtung nach Anspruch 13, wobei die Vorrichtung ferner einen Lautsprecher und/oder ein Display zum Ausgeben des Signals umfasst.

15. System, umfassend:
eine Vorrichtung nach einem der Ansprüche 8 bis 14; und
einen Server, der konfiguriert ist, drahtlos oder drahtgebunden mit der Vorrichtung zu kommunizieren.
